Europäisches Patentamt

European Patent Office

Office européen des brevets

(19)

(11) Publication number: **0 333 086**
**A2**

## EUROPEAN PATENT APPLICATION

(12)

(21) Application number: **89104373.9**

(22) Date of filing: **12.03.89**

(51) Int. Cl.⁴: **B29D 23/22** , **B29C 45/14** , **B29C 45/16**

(30) Priority: **18.03.88 IT 6723488**

(43) Date of publication of application:
**20.09.89 Bulletin 89/38**

(84) Designated Contracting States:
**DE ES FR GB SE**

(71) Applicant: **Orsini, Dario**
**Via Sansovino, 243/59**
**I-10151 Torino(IT)**

Applicant: **Ranalli, Antonio**
**Corso Re Umberto, 37**
**I-10128 Torino(IT)**

(72) Inventor: **Orsini, Dario**
**Via Sansovino, 243/59**
**I-10151 Torino(IT)**
Inventor: **Ranalli, Antonio**
**Corso Re Umberto, 37**
**I-10128 Torino(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Process for injection-molding hollow articles made of polymeric material and items obtained with the process.**

(57) The process comprises, in succession, the following operating steps: separately molding two juxtaposable half-shells (S1-S2), the profile whereof is an axial and equatorial cross section of the article; extracting and coupling the half-shells to form a semiworked article (SL) corresponding to the finished article; transferring the semiworked article into a third mold (30) and the generation of a continuous covering (RV) which includes the semiworked article by inclusion molding and stably connects the half-shells.

Fig. 1

# PROCESS FOR INJECTION-MOLDING HOLLOW ARTICLES MADE OF POLYMERIC MATERIAL AND ITEMS OBTAINED WITH THE PROCESS

The present invention relates to a process for injection-molding hollow articles made of polymeric material and intended to sealingly contain or convey fluids in general, whether liquid or gaseous, and to the articles obtained with said process.

As is known, the injection molding of hollow bodies made of polymeric material, for example of thermoformable resins, is currently performed with the aid of molds provided with adapted cores intended to form the inner surfaces of the cavity or cavities of said body.

Said cores may be constituted by solid bodies which are extracted from the molded article and reused for successive moldings or be of the disposable type, constituted by special materials capable of volatilizing or liquefying when they are heated above a preset temperature threshold.

The adoption of cores of the first type entails, as is known, a considerable structural complexity of the molds, since said molds - especially if intended for large-series production - must be equipped with extraction mechanisms which are increasingly complicated as the complexity of the profile of the articles to be molded increases, for example due to the presence of branching ducts, curves, elbows, undercuts and the like.

The adoption of disposable cores, however, significantly increases production costs and complicates the molding process, since a preliminary step of core-forming is required, thus entailing the duplication of the molds and significantly extending the duration of the production cycle.

Other manufacturing methods, based on the coupling and welding of half-portions of the article, fail to give adequate assurances of reliability if said article is to sealingly contain or convey a fluid in general at a pressure which differs from the atmosphere's (negative pressure or overpressure), and are furthermore not adapted for large-series production since they require the accurate testing of the article thus obtained and several repeated executions of the production cycle.

The aim of the present invention is to eliminate these disadvantages, and within the scope of this general aim an important object is that of providing a process for injection-molding hollow articles, in particular hollow bodies with a complex profile and with an even curvilinear axial shape, adapted to allow a radical simplification of the molds and a considerable reduction of production costs by virtue of the complete elimination of forming cores.

Another important and particular object of the present invention is to provide a process adapted to allow the economical and large-series manufacture of hollow articles, ensuring the perfect finish of the inner surfaces and the complete reliability of the sealing characteristics of said articles, both for overpressure and negative-pressure conditions, said articles being therefore suitable to advantageously replace similar metallic articles such as for example induction manifolds for endothermal motors.

This aim and objects are achieved by a process for injection-molding hollow articles made of polymeric material for sealingly conveying fluids, characterized in that it comprises in succession the following operating steps: separately molding two juxtaposable half-shells, the profile whereof is an axial and equatorial cross section of the article; extracting and coupling the half-shells to form a semiworked article corresponding to the finished article; transferring she semiworked article into a third mold and generating a continuous covering which includes the semiworked article by inclusion molding and stably connects the half-shells, said semiworked article acting as core for generating said continuous covering; and extracting and finishing the finished article.

A generic hollow article obtained with the process according to the present invention is therefore characterized by the presence, in transverse cross section, of at least two superimposed layers of polymeric material: the first inner one corresponds to the cross section of the semiworked article and the second outer one corresponds to the cross section of the covering which includes said semiworked article by inclusion molding.

Further purposes, characteristics and advantages of the present invention will become apparent from the following detailed description and with reference to the accompanying drawings, given only by way of non-limitative example, wherein:

figure 1 is a diagram of the sequential succession of the process's operating steps;

figure 2 is a partially sectional perspective view of a generic hollow article obtained with the process exemplified in figure 1.

In the drawings, the reference numerals 10 and 20 generally indicate two molds, each whereof comprises male and female half-molds, respectively 100-101 and 200-201, controlled by hydraulic opening and closure means 15 and fitted with channels 16 for injecting thermoformable polymeric material.

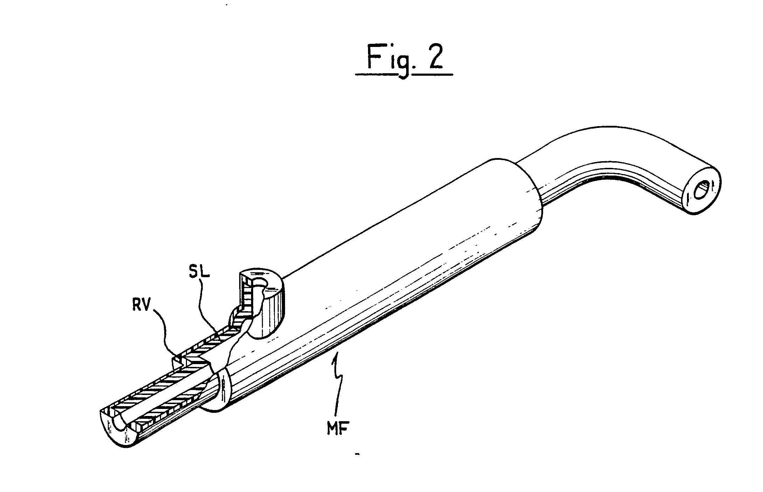

The mold 10 produces a half-shell S1 and the mold 20 produces a half-shell S2; the profile of said half-shells is the virtual cross section of the finished article MF (figure 2) taken along an axial and equatorial plane PA.

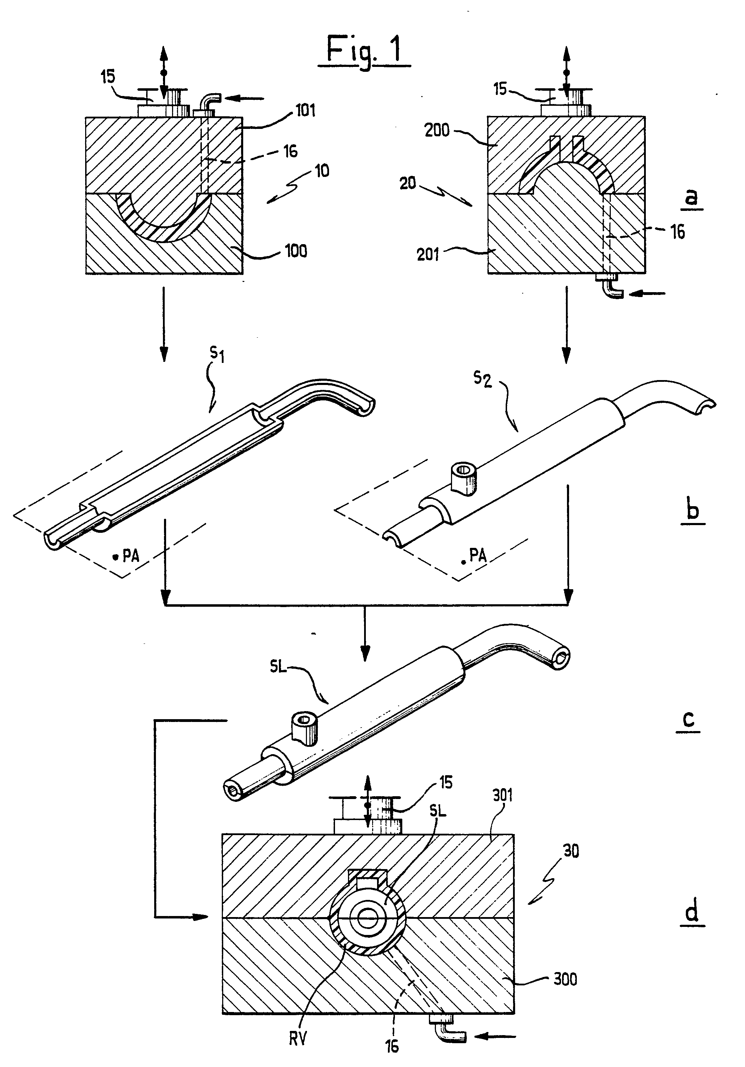

The half-shells S1-S2 are molded in a per se known manner, as shown in step a of figure 1, by injecting the polymeric material through the channel 16 into the space defined between the half-molds of each mold; the male half-mold generates the inner surface and the female half-mold generates the outer surface of the corresponding half-shell. When the molding is complete, the molds 10 and 20 are opened and the half-shells S1-S2 are extracted, as shown in step b of figure 1. In operative succession, said half-shells, possibly freed of their molding burr, are juxtaposed (step c) and temporarily coupled, for example by means of ultrasonic welding spots or by snap-together coupling, in order to form a semiworked article SL corresponding to the finished article MF; said semiworked article has the same inner dimensions as the finished article, but its outer dimensions are smaller for the reasons specified hereafter.

The successive step d of the process consists in arranging the semiworked article SL inside a third mold 30 which comprises two female half-molds 300-301; said semiworked article acts as core to form a continuous covering RV by injecting polymeric material, and said covering includes the semiworked article by inclusion molding and stably and sealingly couples the half-shells S1-S2. The thickness of the covering RV is equivalent to the difference between the outer dimensions of the semiworked article and those of the finished article and is chosen in relation to the mechanical stresses which said article is to withstand in operating conditions; said thickness is preferably comprised between 0.3 and 1 times the thickness of the half-shells S1-S2. The semiworked article SL is naturally arranged in the mold 30 after closing all the openings' which lead into the cavity of said semiworked article by means of appropriate plugs (not illustrated) or of movable cores rigidly associated with the mold, in order to prevent the injected material from entering said cavity during the molding of said covering RV. Once the molding is complete, the obtained article is extracted, and the finished article MF is obtained after a finishing step which includes the removal of any burr and of any plugs which close the openings.

As clearly illustrated in figure 2, said finished article is characterized by the presence, in transverse cross section, of at least two layers of polymeric material which are superimposed and intimately connected by inclusion molding; the first inner one corresponds to the cross section of the semiworked article SL, and the second outer one corresponds to the cross section of the covering RV.

It should be noted that the thickness of the covering RV can be constant or variable; for example it can be greater at any section of the article intended to be subject to higher stress in operating conditions.

The material which forms the covering may similarly be identical to, or different from, that of the semiworked article; for example, the latter may be more rigid to ensure the perfect uniformity of the inner surfaces of the article, while the former may be more resilient so as to give the article sound-absorbing characteristics and to dampen any mechanical vibration.

The details of execution and the embodiments of the article may naturally be varied extensively with respect to what is described merely by way of non-limitative example without altering the concept of the invention and without thereby abandoning the scope of said invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for injection-molding hollow articles made of polymeric material for sealingly conveying fluids, characterized in that it comprises in succession the following operating steps: separately molding two juxtaposable half-shells (S1,S2), the profile whereof is an axial and equatorial cross section of the article (MF); extracting and coupling the half-shells to form a semiworked article (SL) corresponding to the finished article (MF); transferring the semiworked article into a third mold (30) and generating a continuous covering (RV) which includes the semiworked article by inclusion molding and stably connects the half-shells, said semiworked article acting as core for generating said continuous covering; and extracting and finishing the finished article.

2. Process according to claim 1, characterized in that after being extracted said half-shells (S1,S2) are temporarily fixed together.

3. Process according to claims 1 and 2, characterized in that the internal dimensions of the semiworked article (SL) resulting from the juxtaposing and temporary coupling of said half-shells (S1,S2) coincide with those of the finished article (MF) and the external dimensions differ from those of said finished article by an amount equal to the thickness of the continuous covering (RV) which includes said semiworked article.

4. Process according to one or more of the preceding claims, characterized in that the step of molding the continuous covering (RV) is performed after closing all the openings of the semiworked article which are connected to the cavity thereof.

5. Process according to claim 1, characterized in that the article finishing step comprises the operations of removing the molding burr and any closing plugs for the openings connected to the cavities of said article (MF).

6. Article obtained with the process according to claim 1, characterized in that it comprises a hollow body made of thermoformable polymeric material which has, in transverse cross section, at least two superimposed layers of said material, the first inner one (SL) corresponding to the cross section of the semiworked article (SL), the second outer one (RV) corresponding to the cross section of the covering (RV) which includes said semiworked article by inclusion molding.

7. Article according to claim 6, characterized in that said inner and outer layers are made of the same polymeric material.

8. Article according to claim 6, characterized in that said inner and outer layers are of thermoformable polymeric materials but differ in their mechanical and chemical characteristics.

9. Article according to claims 6 and 7 or 8, characterized in that the thickness of said outer layer (RV) is preferably comprised between 0.3 and 1 times the thickness of the inner layer (SL).

10. Article according to claims 6 to 9, characterized in that said outer layer (RV) has a variable thickness which is greater at the article's sections which are to be subject to higher stress in operating conditions.

# Fig. 1

15
101
16
10
100

15
200
20
16
201

$S_1$

$S_2$

PA

PA

SL

15
SL
301
30
300

RV
16

a

b

c

d

# Fig. 2